# EUROPEAN PATENT APPLICATION

(11) **EP 1 471 024 A1**
(43) Date of publication of application: **27.10.2004**
(21) Application number: 04000717.1
(22) Date of filing: 15.01.2004
(51) Int. Cl.: B65H 49/08, B23K 9/133

(54) **Welding wire payout drum**

(30) Priority: 24.04.2003 US 421902
(71) Applicant: LINCOLN GLOBAL, INC., Monterey Park, California 91754 (US)
(72) Inventor: Barton, David J., Twinsburg, OH 44087 (US); Hsu, Christopher, Mentor, OH 44060 (US); Ferguson, Otto III, Oakwood Village, OH 44146 (US); Lance, Douglas S., Mentor, OH 44060 (US)
(74) Representative: Schumacher, Horst, Dr. Dipl.-Phys.

(57) **Abstract**

A welding wire payout drum (A) comprising an outer cylindrical sleeve (10) with an internal diameter (a) and having a top opening (16) with a central wire supporting stem (40) in said drum. The stem (40) has a cylindrical body (42) generally concentric with the outer cylindrical sleeve of the drum and an upper guide ring (50) near the top opening of the drum. The guide ring has an outer circular perimeter (56) with a diameter (d) less than the internal diameter (a) of the outer cylindrical sleeve wherein the upper guide ring has a downwardly decreasing contoured underside shape (54) between the perimeter (56) and the cylindrical body (42) of the stem.

## Description

The present invention relates to the art of electric arc welding and more particularly to a welding wire payout drum having a unique internal structure.

In the welding industry, automatic welding equipment, such as robotic welding stations, normally use a large drum of welding wire, such as disclosed in Cooper 5,277,314. These supply drums have welding wire laid in indexed concentric coils around a center core. Such drums contain a loose supply of welding wire that is often compacted during shipment. To lay a greater volume of coiled welding wire in a standard drum, the mechanism for densely packing welding wire has been developed and is shown in Cooper 6,260,781. Such process can lay upward of 800 pounds in a standard 34 inch drum. These two Cooper patents are incorporated by reference herein as illustrating the type of welding wire drum to which the present invention is directed to eliminate a need for duplicative disclosure. In some instances, the welding wire for automatic welding installation is coiled around a vertically oriented spool so the wire is pulled from the spool in a direction parallel to the axis of the spool. This type of welding wire dispenser is shown in the 2,001 publication by National-Standard entitled *Copper Free, Premium Carbon Steel*/*Low Alloy Weld Wire.* Such welding wire spools are used with a dispensing hat available at the factory site. This publication is incorporated by reference herein showing prior welding wire spools. In non-welding wire technology, a cylindrical housing is used with an internal vertically positioned spool to feed wire upwardly from around the periphery of an upper rim. Such wire dereeling apparatus is disclosed in Brown 4,186,897; Hosbein 4,222,535; and, Japanese patent 63/258372. These wire dereelers are not necessarily related to welding wire and do not have problems associated with dispensing welding wire; however, they are incorporated by reference as background technology, but not as applicable or relevant prior art.

### BACKGROUND OF INVENTION

Automatic welding technology has expanded drastically in the last decade with the introduction of integrated robotic welding stations. These stations require a large volume supply of electric arc welding wire so that an operator need not tend to the welding station on a real time basis. Large welding wire packages have been developed, normally in the form of large vertically positioned drums as disclosed in Cooper 5,277,314 and Cooper 6,260,781. It has been found that pulling wire vertically from a drum has reduced entanglements and interruptions of the welding operation. Since drums present the optimum procedure for feeding wire into the welding equipment, a majority of effort in the past has involved the increase of welding wire available in a standard size supply drum. At this time, wire laying improvements, such as shown in Cooper 6,260,781, have allowed upwards of 1,000 pounds of welding wire in a single 34 inch drum. This wire volume provides long term operation of the robotic welder before it is necessary to splice or otherwise replace the welding wire supply. Efforts to increase the volume of wire in a drum by novel wire laying processes have been successful, but, the supply drums have an upper limit due to the manner in which the welding wire is laid, i.e. concentric convolutions in the drum, as the drum is rotated. It is known that a larger volume of welding wire can be stored on a spool or bobbin. Efforts have been made, somewhat unsuccessfully, to use a spool of wire oriented vertically for supplying welding wire. In this manner, wire is not pulled tangentially as preferred in a spool. To the contrary, the wire is pulled upwardly to duplicate welding wire supplied from a standard supply drum. This is so the robot station need not be designed especially for a spool. These efforts to use spools, thus presented substantial difficulties. Furthermore, it is essential to have a smooth feeding action of a wire from the supply, as obtainable with a supply drum. When pulling wire vertically from a spool, the wire must be pulled upwardly, not tangentially, by force directed to the spool around the upper rim of the spool. As the supply of welding wire is payed out, the kink angle around the upper rim increases to the extent of actually changing the manufactured cast and helix of the welding wire. Thus, the welding wire supplied from a vertically oriented spool, especially as the spool becomes advancingly empty, is deformed and provided with characteristics that are not acceptable in automatic welding equipment. As the welding wire is pulled vertically around the upper rim of the spool, instead of the normal tangential unwind process, the plastic deformation of the welding wire drastically alters the uniformity of the welding operation. The wire has a variable cast as it is forced through the contact sleeve of the welding gun. The weld point of the wire can shift. Furthermore, when the welding is discontinued between welds, the upward pulling force on the wire is discontinued. This allows the deformed wire to cascade downward over the outer surface of the supply spool so that subsequent pulling force can cause tanglements by the deformed wire. To prevent such cascading of the deformed wire, attempts to use a vertical spool also uses an upper braking mechanism. Such mechanism affects the pulling action of the wire and does not really correct the cascading action between welds. All of these disadvantages of efforts to use highly compacted wire spools has confirmed the use of welding wire drums as the desired supply for automatic welding equipment. Consequently, it has not been heretofore possible to capitalize upon the high volume of wire that can be stored on a spool as a replacement to the easily payed out wire from a vertically oriented supply drum.

### THE INVENTION

The present invention relates to a welding wire payout drum having the advantages of the standard drum and incorporating the ability to store large volumes of welding wire on an internal vertically oriented storage reel. This hybrid drum/reel package for electric arc welding wire increases the amount of wire that can be stored, shipped and used in a standard supply drum. Indeed, the hybrid drum of the invention can store well over 1000 pounds of wire and generally up to 2000 pounds.

In accordance with the invention, a welding wire payout drum is provided with an outer cylindrical sleeve with an internal diameter and a top opening. The drum is dimensioned as a standard supply drum for electric arc welding having a height of about 34 inches and a diameter of about 24 inches. Instead of looping the welding wire into the drum in accordance with standard practice, a central wire supporting stem is provided. This stem or spool has a cylindrical body generally oriented concentric with the cylindrical sleeve of the drum and an upper guide ring near the top opening of the drum. The axial length of the stem is in the general range of 32-33 inches, so the stem essentially occupies the drum. Design of the stem is novel and includes an upper guide ring near the top opening of the drum, wherein the guide ring has an outer cylindrical periphery with a diameter less than the internal diameter of the sleeve to thereby define an annular wire payout gap. In accordance with the invention, the upper guide ring has a downwardly decreasing contoured shape between the periphery of the guide ring and the cylindrical body of the stem. The diameter of the guide ring is in the general range of 21-22 inches so that the payout gap is in the range of 1/2-1 inch. To prevent the welding wire wound on the stem from losing its manufactured cast and helix, the internal diameter of the stem is greater than about 16 inches. In practice, the diameter is in the general range of 16-20 inches. By using this large diameter stem, the internal volume of the drum is filled with welding wire which is oriented during the welding process to be fed over the top guide ring, instead of tangentially from the stem. The twist inherent in wrapping a wire around a cylindrical body after it is manufactured with a preset cast and helix necessitates the wire be payed out a given axial direction. A double twist results when the spooled wire is payed out axially in the wrong direction. For this reason, the guide ring is provided only at the top of the wire supporting stem. This identifies the proper payout direction. Furthermore, during the winding operation, tension on the wire is relatively low and just sufficient to take up slack as the wire is fed from the wire forming machine toward the cylindrical body. The body remains fixed and the winding machine rotates around while alternately reciprocating up and down. The precast and set helix welding wire is wound in concentric layers on the cylindrical body of the stem. The winding force is not sufficient to deform the wire.

In accordance with the preferred embodiment of the invention, the supporting stem has a generally flat lower flange that defines, with the upper guide ring, the wire supporting volume of the stem. This stem, with its upper guide ring and lower flange, is integrally formed from a molded plastic. In accordance with an alternative, the lower flange is releasably fixed to the bottom of the stem so that the stem can be removed and the bottom flange returned for reuse. In one embodiment, the lower flange can also be the lower portion of the upstanding cylindrical sleeve defining the supply drum. In practice, the supply drum is formed from a composition material and the top opening is closed with a lid. At the welding site, the lid is removed and a wire feeding hat is provided over the top of the hybrid drum. Then, the wire is pulled through the hat from the stem inside the drum. This pulling action is around the top guide ring. Consequently, the contour of the ring between connecting the outer periphery of the ring and the body of the stem is tapered, concave or convex. The shape gradually progresses from the cylindrical body to the outer periphery of the guide ring. In this manner, the wire is payed out from the stem by merely unwinding the wire. Since the wire is wound on the stem the twist in the wire is 360° when being fed from the top of the stem and around the guide ring. The guide ring is contoured on its bottom to prevent the wire from being kinked when it is being pulled from the drum.

The dimensions of the stem are such that the wire has a wound convolution of at least 16 inches. This diameter is gradually increased as the wire is laid in concentric layers around the cylindrical body of the stem. In this construction, the payout gap is generally in the range of ½-1.0 inches and the height of the stem is over 30 inches. Consequently, the center stem of the hybrid drum or package occupies the volume of a standard drum. Over 2,000 pounds of welding wire can be stored, shipped and payed out from a drum which normally carries less than 1,000 pounds. By using the novel payout guide ring, the wire is not plastically deformed as it is pulled from the body of the stem. In practice, there is no need for a braking structure as required in the known dereelers.

In accordance with another aspect of the present invention there is provided a welding wire storage stem for payout in a given direction. The stem has the characteristics defined above and is used with a standard welding wire drum to define a hybrid welding wire package having a capacity of over 1000 pounds.

The hybrid package of the present invention unitizes the concept of a spool with a standard drum. Wire is stabilized because it is tightly wound on the center stem. Thus, the density of the wire is increased to nearly double the amount of wire available in a wire drum. During shipment, the wire does not settle in the drum because it is tightly wound on the vertically oriented stem. The wire will not fall or cascade onto the coiled wire even when the welding is stopped because the cascade action of the wire is into an open area between the coiled wire and the internal wall of the drum. In a standard drum, the cascading action causes the wire to drop down onto the coiled wire in the drum. By using a drum with an internal vertically oriented stem as in the present hybrid package, when the wire cascades down it has no deformation and has no tendency to intertwine with existing wire in the drum. The invention is not merely a dereeler as in the prior art. To the contrary, it is a container and dereeler constructed to protect the movement of the wire as it is payed from the outer convolutions of the internal stem. There is no recasting of the wire as it is pulled over the upper guide ring of the invention. The wire can have a diameter as small as .035 inches without the pulling force from the center stem causing plastic deformation.

Another advantage of the invention is that the hybrid package has the appearance of a standard supply drum to which the manufacturing facilities are quite accustom. The novel internal structure of the drum is not visible to confuse manufacturing facility people. The coiled wire can be a cored wire as well as a filler wire. The diameter of the wire can be as high as 0.25 inches without the pulling action causing a kink in the wire as it moves over the top guide ring. There is less tendency to tangle even though there is substantially more wire in the hybrid package.

In accordance with one aspect of the invention, the center stem has an integral flat lower flange. This flat lower flange is, in one embodiment, enlarged to form the base of the drum and is detachable. In the winding operation, this large flat flange secured to the bottom of a supply stem is used to restrain the wire as it is wound on the cylindrical body. By having only the top guide ring with its tapered undersurface, the storage stem will be oriented in the drum in the proper position. If the stem were reversed, as could be done with two identical guide rings on opposite ends of the stem, improper orientation of the stem would increase drastically the twist of the wire as it is being payed out. In accordance with an aspect of the invention, the stem with its upper guide ring is formed of plastic and the lower flange is formed from molded plastic. In this manner, the lower flange can be removed and returned for subsequent use while the heavier spool can be destroyed. This increases the reusability of the components of the invention.

By using the present invention, it has been found that payout for .052 wire has a maximum speed of 500 inches per minute. The hybrid drum of the invention allows the payout speed to be over 10,000 inches per minute. Cast and helix of a welding wire as it is manufactured is maintained when the wire is coiled, in ever-increasing convolutions, on the cylindrical body of the stem. Tension during winding is just firm enough for wire take-up and does not deform wire. The drum is filled with the wire using a center stem having a height in the general range of 32-33 inches in a standard 34 inch drum.

The primary object of the present invention is the provision of a hybrid package in the form of a drum with an internal vertically oriented stem on which is wound convolutions of electric arc welding wire.

Another object of the present invention is the provision of a hybrid electric arc welding wire package, as defined above, which package includes an upper guide ring on the center stem to prevent deformation of the wire as it is pulled from the vertically oriented stem in the drum.

Yet another object of the present invention is the provision of a hybrid package, as defined above, which package can provide a large amount of welding wire while maintaining the advantages of a standard drum. The capacity of the hybrid package is over 1000 pounds and as high as about 2000 pounds.

Still a further object of the present invention is the provision of a hybrid package, as defined above, which hybrid package does not have the disadvantages associated with the supply of wire in a standard drum. Cascading of wire between the stem and drum does not tend to cause tangle with the remaining supply of electric arc welding wire.

Still another object of the present invention is the provision of a hybrid package, as defined above, which package can be used as a substitute for normal supply drums while being able to substantially double the capacity of the drum.

These and other objects and advantages will become apparent from the following description taken together with the accompanying drawings.

### BRIEF DESCRIPTION OF DRAWINGS

FIGURE 1 is a pictorial view of the preferred embodiment of the present invention;
FIGURE 2 is a cross sectional view take generally along line 2-2 of FIGURE 1;
FIGURE 3 is a side elevational view illustrating the winding method used in accordance with the preferred embodiment of the present invention;
FIGURE 4 is an exploded view of the preferred embodiment of the present invention with a lid;
FIGURE 5 is an assembled hybrid package constructed in accordance with the present invention with the package closed by a lid for shipment;
FIGURES 6A, 6B and 6C are enlarged cross sectional areas illustrating various shapes used on the underside of the guide ring used in accordance with the present invention;
FIGURE 7 is a partial cross-sectional view illustrating the lower portion of an alternative embodiment of the present invention;
FIGURE 8 is a cross sectional view taken generally along line 8-8 of FIGURE 7;
FIGURE 9 is a view similar to FIGURE 7 showing a further modification of the present invention; and,
FIGURE 10 is a cross sectional view taken generally along line 10-10 of FIGURE 9.

### THE PREFERRED EMBODIMENT

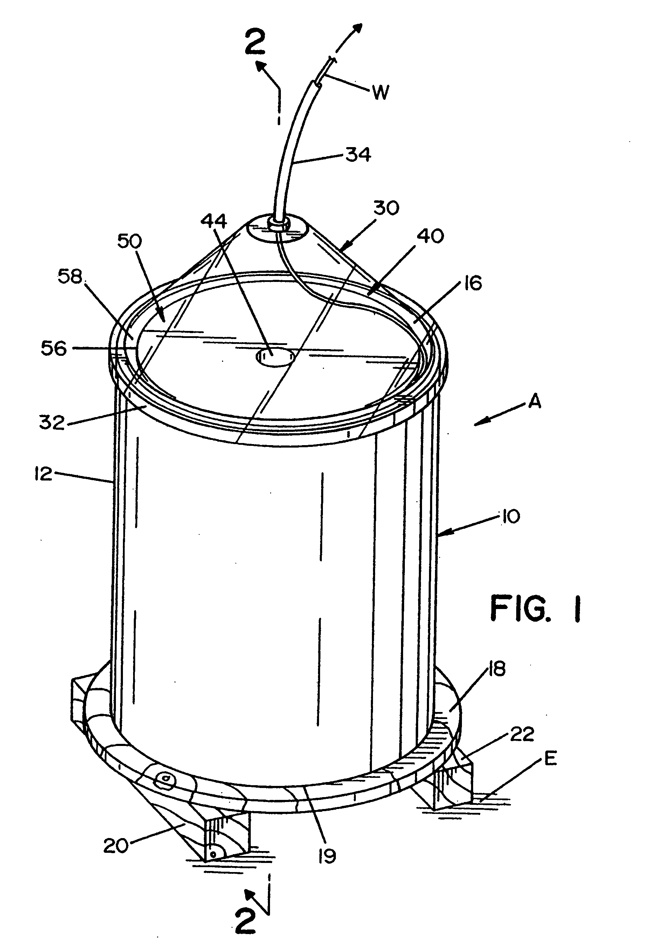

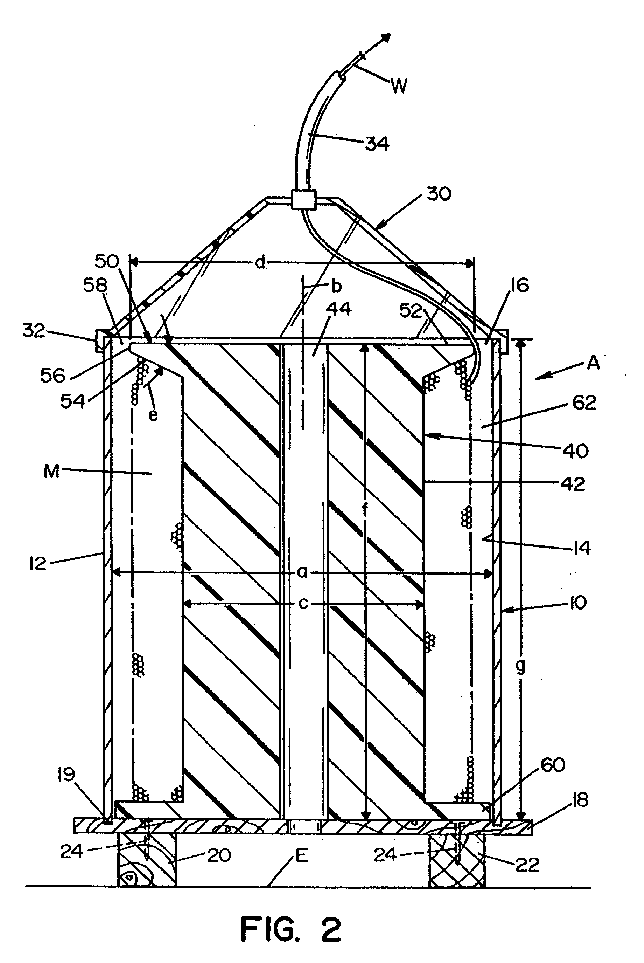

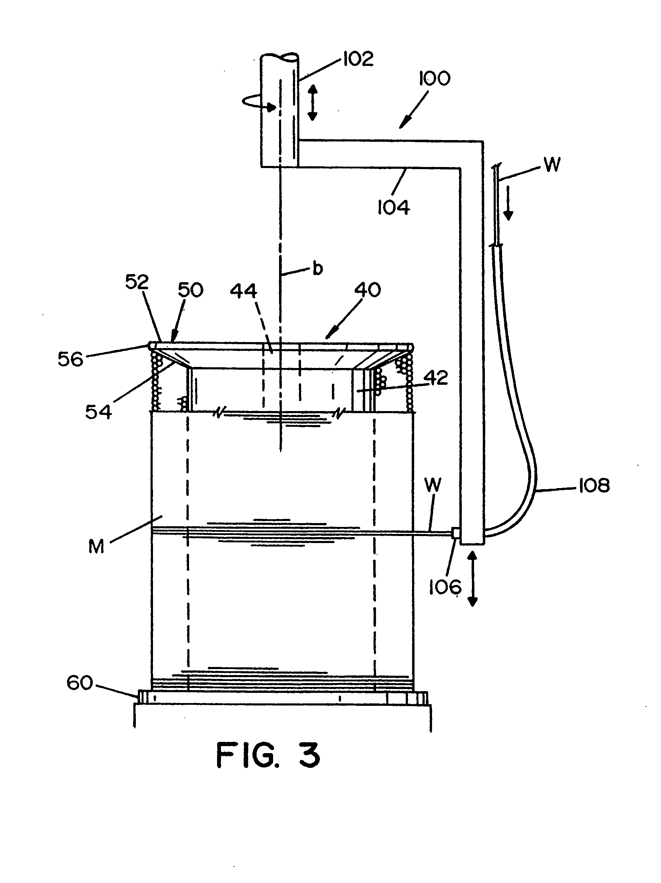

Referring now to FIGURES 1 and 3, hybrid package A for wire W includes a standard drum 10 having a cylindrical body 12 with an internal surface 14. Surface 14 has diameter a which, in practice, is normally 23 inches. The upper end of drum 10 has opening 16 and the drum is located on a wooden base 18 by fitting into circular groove 19. Parallel pallet rails 20, 22 are fixed to base 10 by appropriate fasteners, such as nails 24. At the welding operation, feeder hat 100 is placed over opening 16 and includes a mounting rim 32 for locating the hat over body 12. Feeding tube 34 directs wire W from inside the drum to the welding equipment. In accordance with the invention, drum 10 is provided with an internal, vertically oriented stem 40 having a vertical axes b concentric with surface 14. Stem 40 has a central cylindrical body 42 with an outer diameter c. In practice, diameter c is greater than 16 inches and is preferably in the general range of 16-20 inches. In this manner, wire W is wound in ever-increasing layers on cylindrical body 42; however, there is a minimum wrapping diameter of about 16 inches. This large diameter prevents deformation of the wire, even at the lowermost wound layers. To save material, plastic stem 40 has internal bore 44 concentric with central axis b. In accordance with the invention, the upper end of stem 40 includes guide ring 50 defined between an upper flat top 52 and an undersurface with a downwardly decreasing shape 54. Outer periphery 56 with diameter d, in the general range of 21-22 inches, defines a payout gap 58 having a width in the general range of 1/2-1.0 inches. Shape 54 for the underside ofring 50 is shown as a taper with an angle e. This angle is at least 25°. Preferably, angle e is in the range of 25-45°. Upper guide ring 50 combines with a lower flange 60, shown as integral with body 42, to form a volume on which a mass M of wire W is wound in layers. The height f of stem 40 is approximately 32-33 inches. This height is compared with the height g of sleeve 12, which in practice is about 34 inches. Thus, stem 40 fills the internal volume of drum 10. In practice, as shown in FIGURES 1 and 2, wire W is pulled from around stem 40 through gap 58. The upward tapering of guide ring 50 prevents kinking of the wire as it is being pulled. Thus, the wire is progressively pulled from positions around stem 40 to conveniently and easily unwind wire W from mass M. When the welding operation stops, any slack in wire W merely cascades into space 62 between the outer diameter of mass M and internal surface 14 of drum 10. By using the present invention, the capacity of drum 10 is substantially doubled and the wire does not have the tendency to tangle as it is cascaded back into the supply drum between welding cycles.

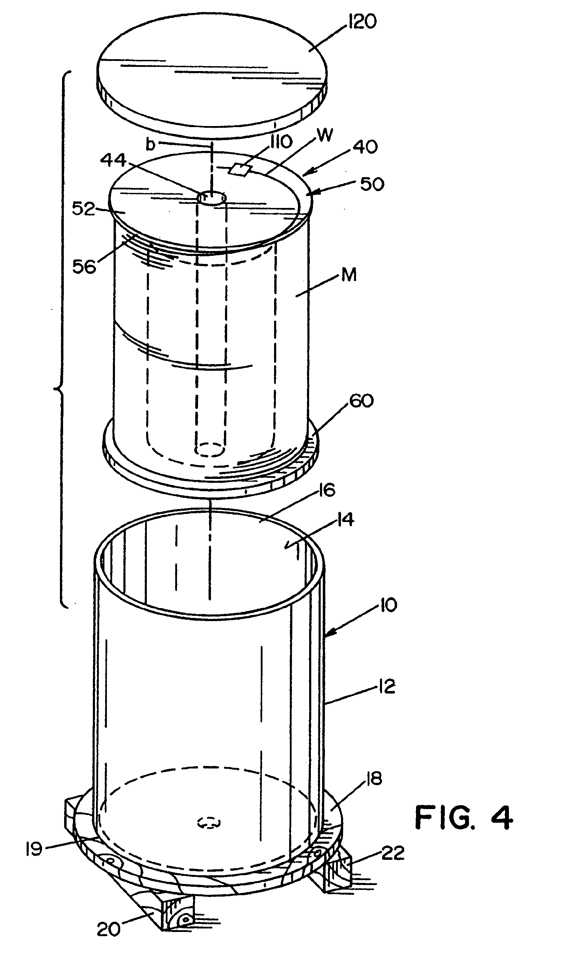

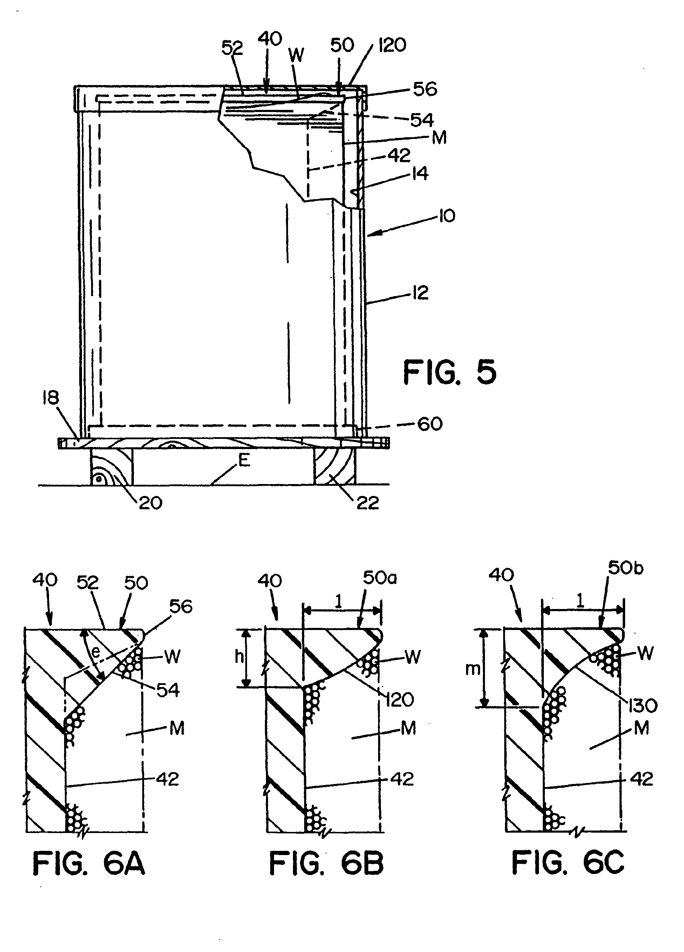

The winding of wire W onto stem 40 is schematically illustrated in FIGURE 3 wherein winding machine 100 includes a rotating and reciprocally operated spindle 102 with an outwardly extending arm 104 that rotates about axis b to feed from outlet nozzle106 wire W supplied from a manufacturing line to tube 108. The wire has a manufactured preset cast and helix. The wire is wound around cylindrical body 42 by progressively moving outlet nozzle 106 vertically upward and then vertically downward to deposit successive layers of wire forming mass M. With the diameter of body 42 being at least about 16 inches and the tension on wire W being merely sufficient to take up slack in the winding operation, wire W maintains its physical characteristics imparted in the manufacturing process. During the winding operation, the convolutions in mass M increase in diameter to reduce any tendency to deform wire W as it is wound onto cylindrical surface 42. The twist of the wire is created as the wire is wound. The stem is oriented so that the wire has its normal 360° twist as it is removed vertically from mass M by way of the upper end. If the stem were unwound in the opposite direction from the bottom end, the twist would be doubled as is well known in the art of winding and unwinding electric arc welding wire. The wire is not deformed during the winding operation shown in FIGURE 3 and is not deformed as it is fed through gap 58 over guide ring 50 as shown in FIGURE 2. After the winding operation fills stem 40, the stem is deposited in drum 10 in a manner illustrated in FIGURE 4. The upper end of wire W is attached to the top surface 52 of guide ring 50 by a tape fastener 110. Thereafter, standard drum lid 120 is placed over the top of the filled drum. By using the invention, the drum 10 carries approximately twice as much wire as carried in a densely packed drum shown in Cooper 6,260,781. FIGURE 5 depicts an assembled hybrid package filled with wire W. By this construction, the wire does not settle during shipment. Such settlement of a standard drum can cause tanglements during payout. Consequently, the hybrid package of the present invention realizes the advantage of a large volume carried in a drum, without the disadvantages of tanglements and kinking during wire payout.

The basic novel aspect of the present invention is the provision of an underside of ring 50 with a gradually outwardly sloping surface from body 42 to the outer periphery of ring 50. Such feature is illustrated in FIGURES 6A, 6B and 6C. In the preferred embodiment, as shown FIGURES 1-5 are enlarged in FIGURE 6A. Underside or shape 54 is conical with an incline surface defining angle e. This angle is in the range of 25° shown by phantom line and 45° shown by solid line. In this manner, wire W is payed out from mass M over ring 50 without experiencing any plastic deformation of the wire, irrespective of its wound diameter. FIGURE 6B illustrates a modification of the invention wherein the underside or shape between the outer periphery of ring 50a and cylindrical surface 42 is convex surface 120. This surface has a height h which is in the general range of 80%-100% of the extended length 1 of ring 50a. A concave surface 130 is illustrated on ring 50b of FIGURE 6C. In this embodiment of the invention height m is less than 100% of extended length 1. Other modifications and combinations of shape 54 can be used in practicing the invention. The underside of guide ring 50 has a gradually decreasing diameter between the periphery of the ring and cylindrical body 42.

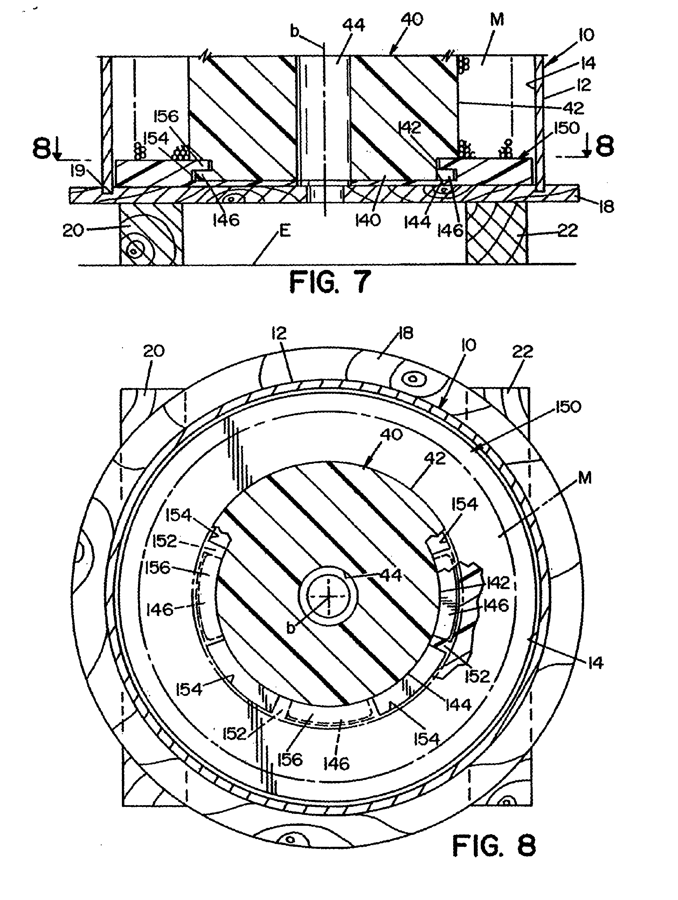

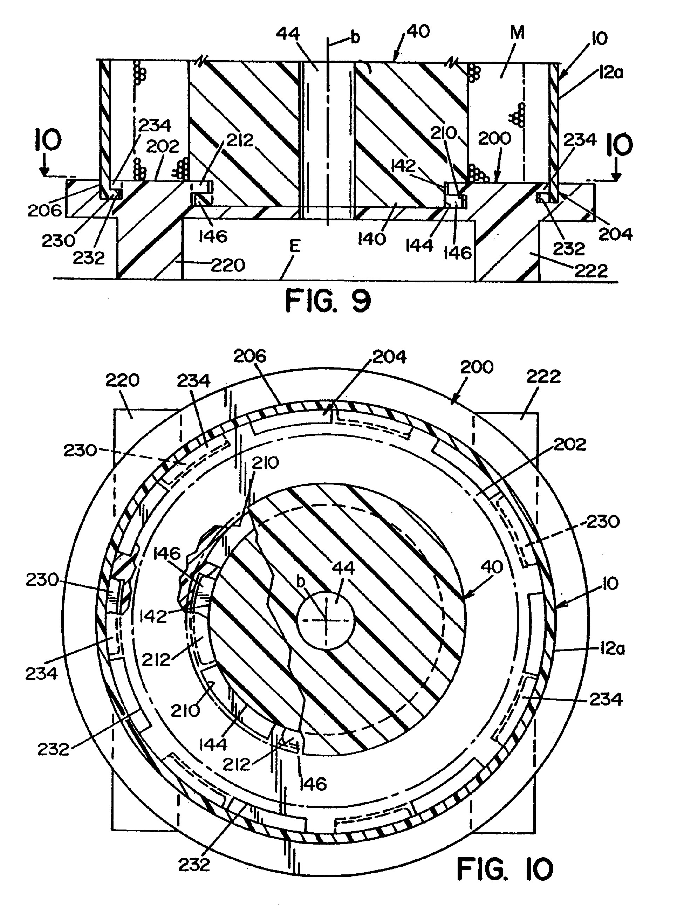

In the preferred embodiment best shown in FIGURE 2, flat flange 60 is integrally formed on the lower end of stem 40. In an alternative embodiment, the flat flange is molded plastic and is releasably attached to lower end 140 of stem 40, as shown in FIGURES 7 and 8. In this modification, a bayonet joint or other arrangement is used to attach removable flat flange 150 onto end 140 of stem 40. The illustrated bayonet joint includes a circular groove 142 on end 140. Below the groove are circumferentially spaced recesses 144 defining therebetween outwardly extending fingers 146. These fingers coact with fingers 156 between openings or recesses 154 on the inner diameter of flat flange 150. Four spaced stops 152 limit rotation of flange 150 on stem 40. By using this design, flange 150 is attached to stem 40 preparatory to the winding operation schematically illustrated in FIGURE 3. After mass M is depleted at the welding operation, the total stem and flange can be withdrawn from the drum and recycled when the drum is returned. Using this concept of a lower attachable flange, it is possible to modify the hybrid package as shown in FIGURES 9 and 10. Stem 40 is constructed, as shown in FIGURES 7 and 8; however, the lower flat flange 60 and base 18 of FIGURE 2 are combined into a single plastic molding 200. This molding has an upper flat surface 202 accomplishing the function of flange 60. Surface 202 extends outwardly to replace groove 19 with a bayonet joint 204 recessed within surface 202. This bayonet joint, or groove, 204 coacts with the lower end 206 of sleeve and cylindrical body 12a having the matching bayonet joint elements. In this manner, sleeve 12a is moved downwardly into the groove and is twisted so fingers 230 on drum 10 lock sleeve 12a onto surface 202 of molding 200. Molding 200 also includes matching bayonet joint recesses 210 (corresponding to recess 154) defining fingers 212 (corresponding to fingers 156) to coact with groove 142 and fingers 146 at lower end 140 of stem 40, as discussed in FIGURES 7 and 8. Fingers 230 extend into recesses 232 under flange 234 to define a standard bayonet joint between drum 120 and molding 200. Parallel pallet rails 220, 222 are integral portions of molding 200. Using the modification illustrated in FIGURES 9 and 10, stem 40 is removed after drum 10 is empty. It is recycled and the remainder of the structure is returned to the manufacturer with sleeve 12a and molding 200. This reduces the weight of return shipment and allows recycling for a major portion of the hybrid package. In the winding operation as explained using the illustration of FIGURE 3, molding 200 is attached to end 140 of stem 40 for use as a flat end defining flange during the winding operation. Then body or sleeve 12a is assembled around the stem and the total package is provided with lid 120 illustrated in FIGURE 5. At the welding operation, lid 120 is removed and replaced with payout hat 30. After the mass M is exhausted from drum 10, stem 40 is rotated and removed fully cycling while molding 200 is returned. In this embodiment, FIGURE 12A may also be returned or recycled separately.

The invention has been explained in accordance with the preferred embodiment as shown in FIGURE 2, together with modifications that allow various assemblies. The basic concept of the invention is the use of a center spool or reel of welding wire that is payed upwardly around guide ring 50 having a lower undersurface that allows gradual movement of the wire upwardly and around the periphery of the ring to prevent kinking especially as the supply of wire decreases and the angle between the cylindrical supply of wire and the outer periphery of flange or ring 50 increases. Combination of various components can be made without departing from the intended spirit and scope of the invention.

## Claims

1. A welding wire payout drum comprising an outer cylindrical sleeve with an internal diameter and having a top opening and a central wire supporting stem in said drum, said stem having a cylindrical body generally concentric with said cylindrical sleeve and an upper guide ring near said top opening, said guide ring having an outer circular perimeter with a diameter less than said internal diameter of said sleeve to thereby define an annular wire payout gap, and wherein said upper guide ring has a downwardly decreasing contoured shape between said perimeter and said cylindrical body of said stem

2. A payout drum as defined in claim 1 wherein said cylindrical body of said stem has a diameter greater than about 16 inches

3. A payout drum as defined in claim 1 or 2 wherein said cylindrical body of said stem has a diameter in the general range of 16-20 inches

4. A payout drum as defined in anyone of the claims 1 to 3 wherein said payout gap is in the general range of ½-10 inches

5. A payout drum as defined in anyone of the claims 1 to 4 wherein said stem contains well over 1000 pounds of welding wire wound in layers of ever-increasing diameters on said cylindrical body

6. A welding wire storage stem for payout in a given direction, said stem having cylindrical body generally concentric with an axis parallel to said given direction and an upper guide ring on one end of said cylindrical body and facing said given direction, said guide ring having an outer circular perimeter with an outer diameter and a downwardly decreasing shape between said perimeter and said cylindrical body

7. A wire storage stem as defined in claim 6 including a mass of welding wire wound upon said cylindrical body without removing the preset cast and helix of the welding wire

8. A wire storage stem as defined in claim 6 or 7 wherein said stem has an axial height of over 30 inches.

9. A wire storage stem as defined in anyone of the claims 6 to 8 wherein said shape has an angle of at least 25º from the horizontal.

10. A wire storage stem as defined in anyone of the claims 1 to 9 wherein said stem has a lower generally flat flange defining with said guide ring the wire supporting volume of said stem

11. A wire storage stem as defined in anyone of the claims 1 to 10 wherein said lower flat flange is integral with said cylindrical body

12. A wire storage stem as defined in anyone of the claims I to 10 wherein said lower flat flange is releasably attached to said cylindrical body

13. A wire storage stem as defined in anyone of the claims 1 to 12 wherein said lower flat flange has an area extending under said sleeve.

14. A wire storage stem as defined in anyone of the claims 1 to 13 wherein said shape is a taper.

15. A wire storage stem as defined in anyone of the claims 1 to 13 wherein said shape is convex

16. A wire storage stem as defined in anyone of the claims 1 to 13 wherein said shape is concave.

17. A wire storage stem as defined in anyone of the claims 1 to 16 wherein said diameter of said circular perimeter is in the general range of 21-22 inches

18. A payout drum as defined in anyone of the claims 1, 10, 11 wherein said shape is a taper.

19. A payout drum as defined in anyone of the claims 1, 10, 11 wherein said shape is convex.

20. A payout drum as defined in anyone of the claims 1, 10, 11 wherein said shape is concave.

21. A payout drum as defined in anyone of the claims 1 to 4, 6, 7, 10, 11 wherein said diameter of said circular perimeter is in the general range of 21-22 inches
